# EUROPÄISCHE PATENTANMELDUNG

(11) **EP 1 886 721 A2**
(43) Veröffentlichungstag der Anmeldung: **13.02.2008**
(21) Anmeldenummer: 07014375.5
(22) Anmeldetag: 21.07.2007
(51) Int. Cl.: B01D 19/00

(54) **Vorrichtung zur Neutralisation von Kondensat aus einem Heizgerät**

(30) Priorität: 05.08.2006 DE 102006036724
(71) Anmelder: Bomat Heiztechnik GmbH, 88662 Überlingen (DE)
(72) Erfinder: Bommer, Rolf, 88662 Überlingen (DE)
(74) Vertreter: Daub, Thomas

(57) **Zusammenfassung**

Die Erfindung bezieht sich auf eine Vorrichtung zur Neutralisation von Kondensat aus einem Heizgerät, umfassend mindestens ein Gehäuse (1) mit einem Gehäuseboden (2), mit einem Kondensateinlass (4), mit einem Kondensatauslass (25) und mit mindestens einer Trennwand (5) zur Unterteilung des Gehäuses (1) in eine erste Kammer (6) zur Aufnahme einer ersten reaktionsfähigen Füllung (7) und in eine zweite Kammer (8) zur Aufnahme einer zweiten reaktionsfähigen Füllung (9).

Um eine Vorrichtung zur Neutralisation von Kondensat aus einem Heizgerät zu schaffen, welche bei deutlicher Kostenersparnis flexibel an unterschiedliche Anforderungen anpassbar ist, wird erfindungsgemäß vorgeschlagen, dass die mindestens eine Trennwand (5) in wenigstens einer Richtung (12) des Gehäuses (1) verstellbar im Gehäuse (1) lagerbar ist.

## Beschreibung

Die Erfindung betrifft eine Vorrichtung zur Neutralisation von Kondensat aus einem Heizgerät nach dem Oberbegriff des Patentanspruchs 1.

Zunehmend kommen in der Heizungstechnik Heizgeräte zum Einsatz, die als so genannte Brennwertgeräte ausgebildet sind. Hierbei wird das Abgas durch Wärmeentzug auf unter 50°C abgekühlt. Dabei tritt der eigentliche Brennwerteffekt ein, d.h. der Wasserdampf, der bei der Verbrennung von Brennstoff entsteht und im Abgas enthalten ist, erreicht den so genannten Taupunkt und kondensiert. Die dabei freigesetzte latente Kondensationswärme wird zusätzlich zur sensiblen Wärme des Abgases auf das Heizsystem übertragen. Hierdurch wird die im Brennstoff enthaltene Energie um einen weiteren Anteil nutzbar gemacht. Hierbei entsteht jedoch saures Kondenswasser bzw. Kondensat, welches Feinstaub, Schwefeloxide, Stickstoffoxide, Teer, Ruß, unverbrannte Kohlenwasserstoffe und/oder Metallverbindungen aus dem Brennstoff bzw. von den gekühlten metallischen Oberflächen, an denen das Abgas kondensiert, enthält. Das Kondensat muss deshalb in einer nachgeschalteten Neutralisationsvorrichtung behandelt werden, bevor es in die Kanalisation gelangen darf. Bei einer Neutralisation erfolgt eine pH-Wert-Verschiebung des Kondensats in Richtung "neutral". Die Neutralisation erfolgt in der Regel in der Form, dass das Kondensat ein zumeist alkalisches Granulat (z.B. Mischung aus Magnesium-Hydroxid und Magnesiumoxid oder Calciumsilikathydrat) durchfließt. Ein Teil des Granulats löst sich im Kondensat, reagiert unter Bildung eines Salzes und verschiebt so den pH-Wert auf 6,5 bis 9. Magnesium-Hydrogenkarbonat ist beispielsweise ein so entstandenes Salz. Es ist für Mensch und Umwelt unbedenklich und kann über den Hausmüll entsorgt werden. Zum Teil sind die Neutralisationsvorrichtungen im Brennwertgerät integriert, zum Teil sind sie extern in die Kondensatableitung eingebunden.

Abhängig vom jeweiligen Brennstoff liegen im Kondensat unterschiedliche Schadstoffe vor. Bei fossilen Brennstoffen handelt es sich beispielsweise um Schwefeloxide, Stickoxide, Kohlenmonoxide, Ruß, Staub, Schwermetalle, Chlorwasserstoffe, Halogene. An den jeweiligen, im Heizgerät verwendeten Brennstoff und die bei der Verbrennung entstehenden Schadstoffe angepasst, sind üblicherweise weitere Einrichtungen zur Behandlung des Kondensats in der Neutralisationsvorrichtung vorgesehen, wie beispielsweise Aktivkohlefilter zur Absorption von Metallverbindungen und/oder Kohlenwasserstoffen, wie z.B. Öl, Verbrennungsrückständen oder Teer, Ionenaustauschern für Schwermetalle etc.

Aus der DE 93 11 083 U1 ist eine gattungsgemäße Vorrichtung zur Neutralisation von Kondensat aus Heizgeräten mit einem Neutralisationsbehälter bekannt. Der Neutralisationsbehälter weist ein Gehäuse mit einem Kondensateinlass und einem Kondensatauslass auf, welches durch eine Trennwand in eine Kammer zur Aufnahme einer Bindemittelfüllung und in eine andere Kammer zur Aufnahme einer Neutralisationsfüllung o.Ä. unterteilt ist. Die Trennwand ist als herausnehmbare Platte in seitliche Führungen des Gehäuses aufgenommen. Die Kammern sind jeweils über einen Siebboden mit einer gemeinsamen Bodenkammer des Gehäuses verbunden. Das Kondensat durchströmt die Kammern nacheinander.

Zum allgemeinen technischen Hintergrund wird noch auf die EP 0 277 300 B1 verwiesen.

Der Erfindung liegt nun die Aufgabe zugrunde, eine Vorrichtung zur Neutralisation von Kondensat aus einem Heizgerät zu schaffen, welche bei deutlicher Kostenersparnis flexibel an unterschiedliche Anforderungen anpassbar ist.

Diese Aufgabe wird erfindungsgemäß durch die im Kennzeichen des Patentanspruchs 1 gegebenen Merkmale gelöst.

Ein wesentlicher Vorteil der Erfindung besteht darin, dass die Trennwand in Richtung des Gehäuses, insbesondere in Längsrichtung des Gehäuses, verstellbar im Gehäuse gelagert ist. Hierdurch kann die Größe der durch die Trennwand unterteilten Kammern den Anforderungen zur Behandlung der im Kondensat enthaltenen Schadstoffe angepasst werden. Insbesondere können auch mehrere Trennwände vorgesehen werden, welche das Gehäuse in weitere individuell angepasste Kammern unterteilen. Vorteilhafterweise kann aufgrund der flexiblen Trennwand bzw. der flexiblen Trennwände hierbei ein Gehäuse an alle unterschiedlichen Anforderungen angepasst werden.

Vorteilhafterweise kann die Trennwand je nach benötigter Kammergröße flexibel in das Gehäuse eingesetzt werden, da das Gehäuse mehrere im Gehäuse fest angebrachte Lagermittel aufweist. Über den in der Richtung des Gehäuses bestehenden Abstand der Führungen kann die Größe der durch das Einsetzen der Trennwand entstehenden Kammern variiert werden.

Vorteilhafterweise können die Führungen für die Trennwand am Gehäuse angeformt werden, wie beispielsweise in einem Tiefzieh- oder Spritzverfahren, so dass ein besonders kostengünstiges Gehäuse herstellbar ist.

Vorteilhafterweise ist die Trennwand über einstellbare Lagermittel vorzugsweise in Form von Führungsschienen in einer Richtung des Gehäuses verstellbar im Gehäuse lagerbar, wodurch eine stufenlose Verstellung der Trennwand im Gehäuse möglich ist.

Vorteilhafterweise weist die Trennwand mindestens teilweise eine veränderbare Dicke auf, so dass zusätzlich zur Verstellung der gesamten Trennwand in Richtung des Gehäuses eine weitere feinere Verstellmöglichkeit in Form einer Dickenänderung der Trennwand besteht.

Weitere Ausgestaltungen und Vorteile der Erfindung gehen aus den übrigen Unteransprüchen und der Beschreibung hervor.

Im Folgenden wird ein Ausführungsbeispiel der Erfindung anhand von vier Figuren näher erläutert. Die Figuren, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird.

Dabei zeigen:

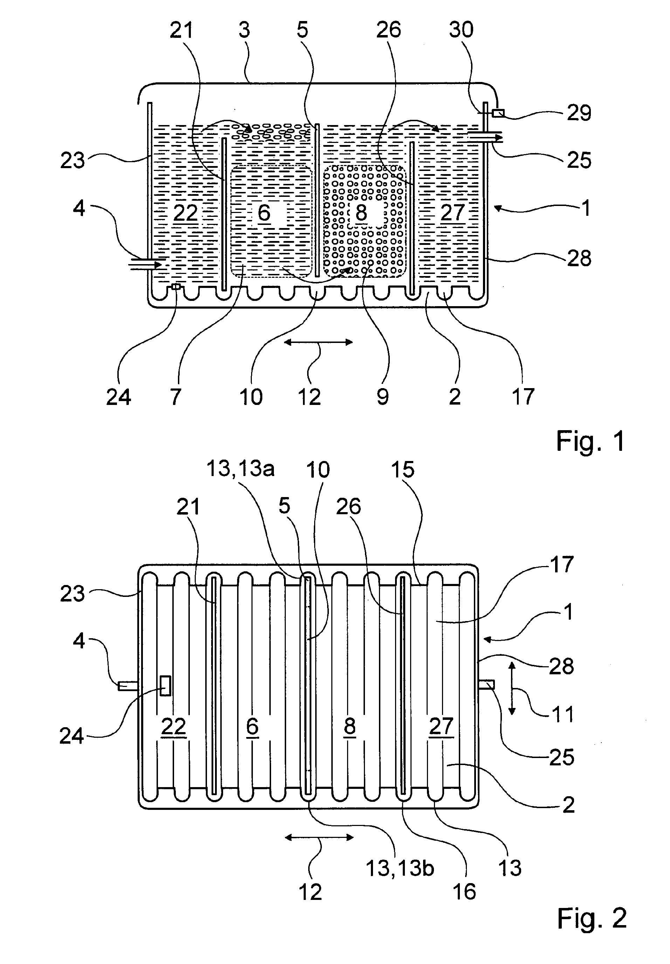

- Fig. 1: einen Längsschnitt durch eine erfindungsgemäße Vorrichtung zur Neutralisation gemäß einem ersten Ausführungsbeispiel mit einem Gehäuse und einer Trennwand, die über an beiden Seiten des Gehäuses fest mit dem Gehäuse verbundene Führungen in einer Längsrichtung des Gehäuses verstellbar im Gehäuse gelagert ist,
- Fig. 2: eine Draufsicht auf das unverschlossene Gehäuse gemäß einem ersten Ausführungsbeispiel mit im Gehäuseboden vorgesehenen Ausnehmungen zur Aufnahme der Trennwand,

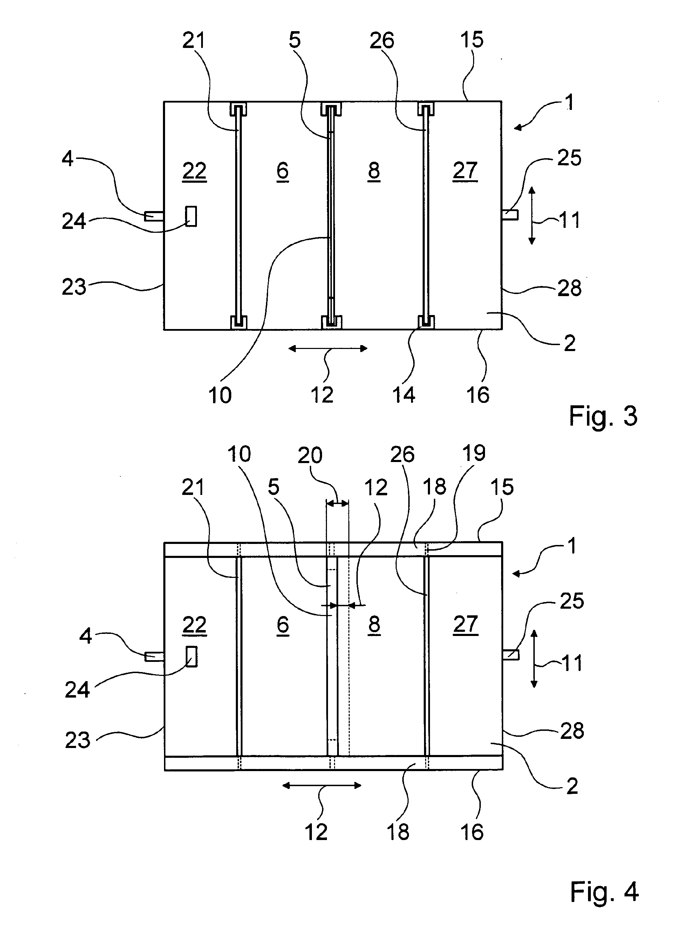

- Fig. 3: eine Draufsicht auf das unverschlossene Gehäuse einer erfindungsgemäßen Vorrichtung zur Neutralisation gemäß einem zweiten Ausführungsbeispiel, bei welchem die Trennwand über an beiden Seiten des Gehäuses lösbar mit dem Gehäuse verbundene Führungen in einer Längsrichtung des Gehäuses verstellbar im Gehäuse gelagert ist, und
- Fig. 4: eine Draufsicht auf das unverschlossene Gehäuse einer erfindungsgemäßen Vorrichtung zur Neutralisation gemäß einem dritten Ausführungsbeispiel, bei welchem die Trennwand über einstellbare Lagermittel in Form von Führungsschienen in einer Längsrichtung des Gehäuses verstellbar im Gehäuse gelagert ist.

Einander entsprechende Bauteile sind in den einzelnen Figuren durchweg mit gleichen Bezugsziffern gekennzeichnet. Von gleichen Bauteilen in einer Figur ist nur jeweils ein Bauteil gekennzeichnet.

Figur 1 zeigt in einem Längsschnitt eine erfindungsgemäße Vorrichtung zur Neutralisation von Kondensat aus einem hier nicht dargestellten Heizgerät für feste, gasförmige und/oder flüssige Brennstoffe. Das Kondensat weist Schwefelverbindungen, Kohlenwasserstoffverbindungen, wie beispielsweise Öl oder Feinstaub, und/oder Metallverbindungen usw. auf.

Die Vorrichtung besteht aus mindestens einem Gehäuse 1, das einen Gehäuseboden 2 aufweist und mit einem abnehmbaren Deckel 3 verschließbar ist. Das Gehäuse 1 weist einen Kondensateinlass 4 auf. Über diesen Kondensateinlass 4 kann das saure, unbehandelte Kondensat entweder gemäß vorliegendem Ausführungsbeispiel frei zufließen oder es kann über eine Förderpumpe in das Gehäuse 1 gedrückt werden.

Das Gehäuse 1 wird über eine im Gehäuse 1 befindliche Trennwand 5 in eine erste Kammer 6 zur Aufnahme einer ersten reaktionsfähigen Füllung 7 und eine zweite Kammer 8 zur Aufnahme einer zweiten reaktionsfähigen Füllung 9 unterteilt, wobei auch mehrere Trennwände vorgesehen sein können, welche das Gehäuse 1 in weitere Kammern zur Neutralisation und/oder Reinigung des Kondensats unterteilen. In den beiden vorliegenden Ausführungsbeispielen dient die erste Kammer 6 zur Aufnahme von Bindemittel und die zweite Kammer 8 zur Aufnahme von Neutralisationsmittel, wobei jegliche reaktionsfähige Füllung und jegliche Kombination von Füllungen vorstellbar sind.

Die Trennwand 5 weist entweder mindestens einen hier nicht dargestellten Überlauf oder mindestens eine Durchflussöffnung 10 gemäß Figur 1 für das Kondensat auf, wobei die Kammern 6, 8 von dem Kondensat nacheinander durchströmt werden. Vorzugsweise ist die Durchflussöffnung 10 in einem geodätisch unteren Bereich der Trennwand 5 angeordnet und erstreckt sich nahezu über die gesamte in einer Querrichtung 11 verlaufende Länge der Trennwand 5. Die erste Kammer 6 weist ein Bindemittel, vorzugsweise in Form von Aktivkohle, und die zweite Kammer 8 weist ein Neutralisationsmittel auf, wie beispielsweise eine Mischung aus Magnesiumoxid und/oder Magnesiumcarbonat und/oder Kalziumcarbonat, welche in der Regel aus einer losen Schüttung von neutralisationswirksamem Granulat besteht. Die Aktivkohle ist in der Lage, die im Kondensat befindlichen Metallverbindungen und/oder Kohlenwasserstoffe, wie z.B. Öl, Verbrennungsrückstände oder Teer, zu absorbieren. Dadurch wird die Oberfläche des nachfolgenden Neutralisationsgranu-lats nicht mit diesen Rückständen belegt und bleibt für die pH-Wert-Neutralisation länger aktiv. Das Gehäuse 1 weist einen Kondensatauslass 25 zum Abfluss des neutralisierten Kondensats auf.

Um eine Vorrichtung zur Neutralisation von Kondensat aus einem Heizgerät zu schaffen, welche bei deutlicher Kostenersparnis flexibel an unterschiedliche Anforderungen anpassbar ist, wird erfindungsgemäß vorgeschlagen, dass die mindestens eine Trennwand 5 in einer Längsrichtung 12 des Gehäuses 1 verstellbar im Gehäuse 1 lagerbar ist.

In den ersten beiden Ausführungsbeispielen gemäß den Figuren 1 bis 3 sind Lagermittel 13, 14 in Form von mehreren an beiden Seitenwänden 15, 16 des Gehäuses 1 angeordneten, fest oder lösbar mit dem Gehäuse 1 verbundenen Führungen ausgebildet. Sind die Führungen 13 gemäß Figur 2 fest mit dem Gehäuse 1 verbunden, so werden eine Vielzahl von in Längsrichtung 12 des Gehäuses 1 beabstandeten Führungen 13 zur Verstellung der Trennwand 5 benötigt, wovon jeweils zusammenwirkende Führungen 13a, 13b zum Einsatz kommen. Üblicherweise sind dies einander an den Seitenwänden 15, 16 des Gehäuses 1 gegenüberliegende Führungen. Beim Verstellen der Trennwand 5 wird diese dann in andere zusammenwirkende Führungen 13 eingesetzt. Die Vielzahl der Führungen 13 in Längsrichtung 12 des Gehäuses 1 ermöglicht die Verstellbarkeit der Trennwand 5, wobei die Abstände der Führungen 13 in Längsrichtung 12 des Gehäuses 1 die Variationsmöglichkeit der Kammergröße vorgeben. Vorteilhafterweise ist das Gehäuse 1 als Formteil hergestellt, an welchem die Führungen 13 angeformt sein können. Vorteilhafterweise sind entsprechend der an den Seitenwänden 15, 16 angebrachten Führungen 13 am Gehäuseboden 2 Ausnehmungen 17 gemäß den Figuren 1 und 2 vorgesehen, in welche die Trennwand 5 zusätzlich aufnehmbar ist. Sind die Führungen 14 gemäß Figur 3 lösbar, beispielsweise über Clips- oder Schraubverbindungen, mit dem Gehäuse 1 verbunden, so werden diese zur Verstellung der Trennwand 5 an anderen Stellen des Gehäuses 1 angebracht und danach die Trennwand 5 wieder eingesetzt.

Im dritten Ausführungsbeispiel gemäß Figur 4 ist die Trennwand 5 über einstellbare Lagermittel 18 in einer Längsrichtung 12 des Gehäuses 1 verstellbar im Gehäuse 1 gelagert. Vorzugsweise handelt es sich bei den Lagermitteln 18 um an Seitenwänden 15, 16 des Gehäuses 1 angeordnete, in Längsrichtung 12 verlaufende Führungsschienen 18, in denen die Trennwand 5, beispielsweise über Vorsprünge 19, stufenlos verstellbar gelagert ist.

Vorteilhafterweise weist die Trennwand 5 mindestens teilweise eine veränderbare Dicke 20 auf, wie in Figur 4 gestrichelt schematisch dargestellt, wobei diese Dickenänderung der plattenförmigen Trennwand 5 beispielsweise pneumatisch erfolgen kann. Hierdurch ist eine weitere Verstellmöglichkeit in Längsrichtung 12 des Gehäuses 1 gegeben. Insbesondere bei den fest oder lösbar mit dem Gehäuse 1 verbundenen Führungen 13, 14 können hier auch feine Einstellungen der Größe der Kammern 6, 8 erreicht werden, welche durch die Lagermittel 13, 14 allein nicht erreichbar wären.

Im Bereich des Kondensateinlasses 4 ist eine Trenneinrichtung 21 vorgesehen, die einen Kontakt zwischen im Kondensat enthaltenen schwimmenden Verbrennungsrückständen, unverbrannten Kohlenwasserstoffen und/oder Öl und dem Bindemittel verhindert und einen Freiraum 22 zwischen Bindemittel und einer Gehäusewand 23 schafft. Die vorzugsweise plattenförmige Trenneinrichtung 21 ist ebenfalls in Richtung der Längsrichtung 12 des Gehäuses 1 verstellbar im Gehäuse 1 angeordnet und verwendet dieselben Lagermittel 13, 14 oder 18, welche auch für die Trennwand 5 vorgesehen sind.

Vorzugsweise mündet der Kondensateinlass 4 gemäß Figur 1 in der Nähe des Gehäusebodens 2 in den Freiraum 22 zwischen Gehäusewand 23 und Trenneinrichtung 21, wobei der Gehäuseboden 2 im Bereich des Freiraums 22 eine Entleerungsöffnung 24 zur Abfuhr von schweren Teilchen, die sich am Gehäuseboden 2 abgesetzt haben, aufweist.

Im Bereich des Kondensatauslasses 25 ist eine weitere Trenneinrichtung 26 vorgesehen, welche einen Freiraum 27 zwischen dem Neutralisationsmittel und einer Gehäusewand 28 schafft. Die Trenneinrichtung 26 ist ebenfalls in Richtung der Längsrichtung 12 des Gehäuses 1 verstellbar im Gehäuse 1 angeordnet und verwendet dieselben Lagermittel 13, 14 oder 18, welche auch für die Trennwand 5 vorgesehen sind. In der Vorrichtung kann eine Indikationseinrichtung vorgesehen sein, die anzeigt, ob saures oder neutralisiertes Kondensat das Gehäuse 1 verlässt.

In einem geodätisch oben liegenden Bereich des Gehäuses 1 ist eine Warneinrichtung 29 vorgesehen, die eine Störmeldung ausgibt, wenn ein maximaler Flüssigkeitsstand bzw. eine maximale Füllhöhe 30 im Gehäuse 1 überschritten ist. Die Abgabe der Störmeldung führt zum Abschalten eines Brenners des Heizgeräts, so dass kein weiteres Kondensat entsteht.

In einem geodätisch höher liegenden Bereich des Gehäuses 1 sind hier nicht dargestellte Bakterien vorgesehen, welche nach oben steigende, unverbrannte Kohlenwasserstoffe und/oder Schwefel biologisch zu einer gallertartigen Masse abbauen.

Die Vorrichtung funktioniert als Wassersperre, und zwar zwischen dem Kondensateinlass 4 und der oberen Kante der Trennwand 21, zur Vermeidung eines Austritts von Gasen aus dem Heizgerät.

Zur Inbetriebnahme der Vorrichtung muss das Gehäuse 1 vollständig bzw. bis zu der maximalen Füllhöhe 30 mit Wasser gefüllt werden.

Über den Kondensateinlass 4 gelangt das saure, unbehandelte Kondenswasser aus dem Heizgerät zuerst in den zwischen Gehäusewand 23 und Trenneinrichtung 21 gebildeten Freiraum 22 in die Nähe des Gehäusebodens 2. Dort lagern sich die im Kondensat befindlichen schwereren Teilchen, wie beispielsweise Asche und Ruß, ab und können vorzugsweise über die Entleerungsöffnung 24 im Gehäuseboden 2 aus dem Gehäuse 1 entfernt werden. Das auf diese Weise von Feststoffteilchen weitestgehend gereinigte Kondensat steigt zusammen mit den im Kondensat schwimmenden unverbrannten Kohlenwasserstoffen und Öltröpfchen im Freiraum 22 zwischen der Trenneinrichtung 21 und der Gehäusewand 23 nach oben. Das Kondensat läuft über die Trenneinrichtung 21 in die dem Freiraum 22 benachbarte erste Kammer 6. Die schwimmenden Verbrennungsprodukte sammeln sich dabei an der Oberfläche und sind durch eine Wasserschicht vom Bindemittel getrennt. Die Öltröpfchen und die unverbrannten schwimmenden Kohlenwasserstoffe werden entweder durch Aufsaugkörper aufgenommen oder es sind in einem geodätisch höher liegenden Bereich des Gehäuses 1 Bakterien vorgesehen, welche dieselben biologisch zu einer gallertartigen Masse abbauen. Das von den schwimmenden unverbrannten Kohlenwasserstoffen und/oder Öl weitestgehend gereinigte Kondensat durchfließt das Bindemittel. In dem Bindemittel werden im Wesentlichen die noch im Kondensat enthaltenen, gelösten und ungelösten Kohlenwasserstoffe aufgenommen bzw. absorbiert.

Aus der Bindemittelkammer 6 gelangt das auf diese Weise von Feststoffteilchen und den schwimmenden unverbrannten Kohlenwasserstoffen und/oder Öl weitestgehend gereinigte Kondensat über die mindestens eine Durchflussöffnung 10 in der zwischen den Kammern 6, 8 befindlichen Trennwand 5 in die mit Neutralisationsmittel gefüllte zweite Kammer 8 zur Neutralisation. Hierbei wird der pH-Wert des Kondensats auf einen zulässigen Wert angehoben, vorteilhafterweise auf einen pH-Wert zwischen 6,5 und 7,0. Anschließend läuft das neutralisierte Kondensat bzw. das Wasser über die Trenneinrichtung 26 in den Freiraum 27 zwischen Neutralisationsmittel und Gehäusewand 28. Von dort gelangt das Wasser über den Kondensatauslass 25 in der Regel in die hier nicht dargestellte Kanalisation. Es fließt die Überlaufmenge an Wasser aus dem Gehäuse 1, welche durch das ständig anfallende Kondensat erzeugt wird.

### Bezugszeichenliste für BOM 1858 EP

| | |
|---|---|
| 1 | Gehäuse |
| 2 | Gehäuseboden |
| 3 | Deckel |
| 4 | Kondensateinlass |
| 5 | Trennwand |
| 6 | erste Kammer |
| 7 | Füllung |
| 8 | zweite Kammer |
| 9 | Füllung |
| 10 | Durchflussöffnung |
| 11 | Querrichtung |
| 12 | Längsrichtung |
| 13 | Lagermittel (fest) |
| 14 | Lagermittel (lösbar) |
| 15 | Seitenwand |
| 16 | Seitenwand |
| 17 | Ausnehmungen |
| 18 | Lagermittel (einstellbar) |
| 19 | Vorsprünge |
| 20 | Dicke der Trennwand |
| 21 | Trenneinrichtung |
| 22 | Freiraum |
| 23 | Gehäusewand |
| 24 | Entleerungsöffnung |
| 25 | Kondensatauslass |
| 26 | Trenneinrichtung |
| 27 | Freiraum |
| 28 | Gehäusewand |
| 29 | Warneinrichtung |
| 30 | maximale Füllhöhe |

## Patentansprüche

1. Vorrichtung zur Neutralisation von Kondensat aus einem Heizgerät, umfassend mindestens ein Gehäuse (1) mit einem Gehäuseboden (2), mit einem Kondensateinlass (4), mit einem Kondensatauslass (25) und mit mindestens einer Trennwand (5) zur Unterteilung des Gehäuses (1) in eine erste Kammer (6) zur Aufnahme einer ersten reaktionsfähigen Füllung (7) und in eine zweite Kammer (8) zur Aufnahme einer zweiten reaktionsfähigen Füllung (9),
**dadurch gekennzeichnet, dass**
die mindestens eine Trennwand (5) in wenigstens einer Richtung (12) des Gehäuses (1) verstellbar im Gehäuse (1) lagerbar ist.

2. Vorrichtung nach Anspruch 1,
**dadurch gekennzeichnet, dass**
die Trennwand (5) über eine Mehrzahl an fest im Gehäuse (1) angebrachten Lagermitteln (13) in der Richtung (12) des Gehäuses (1) verstellbar im Gehäuse (1) lagerbar ist.

3. Vorrichtung nach Anspruch 1 oder 2,
**dadurch gekennzeichnet, dass**
die Trennwand (5) über lösbar im Gehäuse (1) angebrachte Lagermittel (14) in der Richtung (12) des Gehäuses (1) verstellbar im Gehäuse (1) lagerbar ist.

4. Vorrichtung nach einem der vorhergehenden Ansprüche,
**dadurch gekennzeichnet, dass**
die Trennwand (5) in an beiden Seitenwänden (15, 16) des Gehäuses (1) angeordneten Führungen (13, 14) flexibel einsetzbar ist.

5. Vorrichtung nach einem der vorhergehenden Ansprüche,
**dadurch gekennzeichnet, dass**
die Führungen (13) an den Seitenwänden (15, 16) des Gehäuses (1) angeformt sind.

6. Vorrichtung nach einem der vorhergehenden Ansprüche,
**dadurch gekennzeichnet, dass**
die Trennwand (5) über einstellbare Lagermittel (18) in der Richtung (12) des Gehäuses (1) verstellbar im Gehäuse (1) lagerbar ist.

7. Vorrichtung nach einem der vorhergehenden Ansprüche,
**dadurch gekennzeichnet, dass**
die Trennwand (5) in im Gehäuse (1) angeordneten, in Richtung (12) des Gehäuses (1) verlaufenden Führungsschienen (18) lagerbar ist.

8. Vorrichtung nach einem der vorhergehenden Ansprüche,
**dadurch gekennzeichnet, dass**
die Trennwand (5) mindestens teilweise eine veränderbare Dicke (20) aufweist.

9. Vorrichtung nach einem der vorhergehenden Ansprüche,
**dadurch gekennzeichnet, dass**
es sich bei den reaktionsfähigen Füllungen (7, 9) um Bindemittel und/oder Neutralisationsmittel handelt.

10. Vorrichtung nach einem der vorhergehenden Ansprüche,
**dadurch gekennzeichnet, dass**
mehrere Trennwände (5) vorgesehen sind, welche mehrere Kammern (6, 8) im Gehäuse (1) ausbilden.

11. Vorrichtung nach einem der vorhergehenden Ansprüche, **gekennzeichnet durch** die Ausbildung als Wassersperre.
